# EUROPÄISCHE PATENTANMELDUNG

(11) **EP 4 324 703 A1**
(43) Veröffentlichungstag der Anmeldung: **21.02.2024**
(21) Anmeldenummer: 23190617.3
(22) Anmeldetag: 09.08.2023
(51) Int. Cl.: B60R 11/04, B60R 1/06, B62D 35/00

(54) **BEOBACHTUNGSEINRICHTUNG UND KRAFTFAHRZEUG MIT DER BEOBACHTUNGSEINRICHTUNG**

(30) Priorität: 16.08.2022 DE 102022120706
(71) Anmelder: VOLKSWAGEN AG, 38440 Wolfsburg (DE)
(72) Erfinder: DÖHLERT, Steffen, 39130 Magdeburg (DE); LÜBBEN, Uwe, 49179 Ostercappeln (DE)
(74) Vertreter: Schulz Junghans Patentanwälte PartGmbB

(57) **Zusammenfassung**

Die vorliegende Erfindung betrifft eine Beobachtungseinrichtung (1) für ein Kraftfahrzeug zur Beobachtung des rückwärtigen Verkehrsgeschehens, umfassend ein Fußelement (10) mit einem Fußelementkörper (12) zur Befestigung an einer Karosserie oder einem Anbauteil des Kraftfahrzeugs, sowie umfassend ein am Fußelement (10) gelenkig angeordnetes Kopfelement (20) mit einem Kopfelementkörper (21) und einem darin oder daran angeordneten Beobachtungselement (2), wobei der Fußelementkörper (12) und der Kopfelementkörper (21) an wenigstens einem Spalt (40) aneinander angrenzen und der Kopfelementkörper (21) an den Spalt (40) angrenzend zumindest einen eingezogenen Bereich (24) aufweist, so dass durch den eingezogenen Bereich (24) eine Stufe (50) zwischen dem Fußelementkörper (12) und dem Kopfelementkörper (21) ausgebildet ist.

Ferner betrifft die Erfindung ein Kraftfahrzeug; welches mit der Beobachtungseinrichtung ausgestattet ist.

## Beschreibung

Die vorliegende Erfindung betrifft eine Beobachtungseinrichtung und ein Kraftfahrzeug, welches mit der Beobachtungseinrichtung ausgestattet ist.

Für die Teilnahme am Straßenverkehr ist es unerlässlich und rechtlich notwendig, Ereignisse und Verkehrssituationen auch hinter einem fahrenden Kraftfahrzeug überwachen bzw. beobachten zu können. Zu diesem Zweck werden seit langer Zeit Rückspiegel verwendet, die durch einfache Reflexion eine Beobachtung des rückwärtigen Verkehrsgeschehens ermöglichen. Außenspiegel erstrecken sich dabei von der Karosserie oder auch einem Karosserie-Anbauteil, wie zum Beispiel einer Tür eines Kraftfahrzeugs, nach außen. Hier sind die Außenspiegel der Anströmung des Fahrtwindes ausgesetzt.

Um die Gefahr von Beschädigungen zu verringern und um einen geringeren Platzbedarf aufzuweisen werden Außenspiegel oftmals klappbar eingerichtet, sodass sie von einer relativ weit vom Karosseriekörper abstehende Position eingeklappt werden können, sodass das mit dem Außenspiegel ausgestattete Kraftfahrzeug insgesamt eine geringere Breite aufweist. Diese Klapp- oder Schwenkbarkeit des Außenspiegels erfordert im Bereich der Verbindung zwischen der Befestigung an der Karosserie bzw. dem Karosserie-Bauteil und der Spiegelfläche ein Gelenk sowie einen Spalt bzw. eine Fuge, in dem eine Relativbewegung der Spiegelfläche in Bezug zur Befestigungsbereich ausgeführt werden kann. Nachteilig dabei ist jedoch, dass den Außenspiegel anströmende Luft auf Kanten oder auch auf vorstehende Elemente im Spaltbereich strömen kann, wodurch akustische Emissionen ausgelöst werden. Mit anderen Worten kann es zu akustischen Auffälligkeiten im Bereich der Drehgelenkfuge kommen.

Aus dem Stand der Technik sind verschiedene Ausgestaltungen von Außenspiegeln bekannt. So offenbart die US 996 3073 B1 einen rahmenlosen Außenspiegel, der einen Stufensprung am Übergang zwischen Gehäuse eines mittels eines Fußelements gehaltenen Kopfelements und Spiegelträger aufweist. Der Stufensprung dient dem Ableiten von Regenwasser.

Die DE 10 2011 000 740 B4 offenbart eine Tropfenrinne im Gehäuse eines Außenspiegels, wobei die Tropfenrinne hinsichtlich der Tiefe abgestufte Wandungen aufweist, so dass einerseits Regenwasser abgeführt werden kann und andererseits eine Abrisskante zur Minderung von Strömungsgeräuschen geschaffen wird.

D3 DE102008013605A1 zeigt eine Stufe im Gehäuse eines Spiegels in einer Ebene, die im Wesentlichen parallel zu einer Spiegelfläche verläuft.

Der vorliegenden Erfindung liegt die Aufgabe zugrunde, eine Beobachtungseinrichtung für ein Kraftfahrzeug zur Beobachtung des rückwärtigen Verkehrsgeschehens sowie ein damit ausgestattetes Kraftfahrzeug zur Verfügung zu stellen, die eine einfache, robuste sowie kostengünstige Ausgestaltung mit einem Design vereinbart, welches bei Anströmung mit Luft im Fahrbetrieb des Kraftfahrzeugs verringerte Geräusch-Emissionen bewirkt.

Die Aufgabe wird erfindungsgemäß gelöst durch die Beobachtungseinrichtung nach Anspruch 1 sowie durch das Kraftfahrzeug nach Anspruch 10. Vorteilhafte Ausgestaltungsformen der Beobachtungseinrichtung sind in den Unteransprüchen 2-9 angegeben.

Ein erster Aspekt der Erfindung ist eine Beobachtungseinrichtung für ein Kraftfahrzeug zur Beobachtung des rückwärtigen Verkehrsgeschehens, welche ein Fußelement mit einem Fußelementkörper zur Befestigung an einer Karosserie oder einem Anbauteil des Kraftfahrzeugs sowie ein am Fußelement gelenkig angeordnetes Kopfelement mit einem Kopfelementkörper und einem darin oder daran angeordneten Beobachtungselement umfasst. Der Fußelementkörper und der Kopfelementkörper grenzen an wenigstens einem Spalt aneinander an. Der Kopfelementkörper weist an den Spalt angrenzend zumindest einen eingezogenen Bereich auf, so dass durch den eingezogenen Bereich eine Stufe zwischen dem Fußelementkörper und dem Kopfelementkörper ausgebildet ist. Dadurch wird der Luftstrom gestört und löst sich von der Oberfläche ab. Entsprechend wird verhindert, dass die Beobachtungseinrichtung anströmende Luft bei einer Strömung entlang des Fußelementkörpers in Richtung auf den Kopfelementkörper bei Überströmung des Spaltes auf eine Kante des Kopfelementkörpers trifft und dort eine unerwünschte Geräuschbildung bewirkt. Mit anderen Worten ist der eingezogene Bereich dort angeordnet, wo bei der Vorwärtsfahrt eines mit der Beobachtungseinrichtung ausgerüsteten Kraftfahrzeugs die Beobachtungseinrichtung anströmende Luft entlang der Beobachtungseinrichtung strömt, so dass sie erst entlang des Fußelementkörpers strömt und dann entlang des Kopfelementkörpers strömt.

Eine Absenkung der Anschlußflächen des Spiegelfußes im Bereich der Drehgelenksdichtung führt zu einem Stufensprung. Es kommt zu keinerlei akustischen Auffälligkeiten.

Wenn der Fußelementkörper und der Kopfelementkörper zusammen einen Verbindungsholm ausbilden, erstreckt sich ein solcher Verbindungsholm, in dem ein oder mehrere Spalte zwischen dem Fußelementkörper und dem Kopfelementkörper vorhanden sind, sich grundsätzlich von der Karosserie oder einem Karosserie-Anbauteil von dieser bzw. diesem weg. Dabei kann ein solcher Verbindungsholm auch derart ausgestaltet sein, dass er mit einer Komponente seiner Längserstreckungsrichtung parallel zur Fahrtrichtung des mit der Beobachtungseinrichtung ausgerüsteten Kraftfahrzeugs verläuft. In dieser Ausrichtung strömt bei Vorwärtsfahrt des mit der Beobachtungseinrichtung ausgerüsteten Kraftfahrzeugs die Luft entsprechend derart an der Beobachtungseinrichtung, dass sie zuerst am Fußelementkörper entlang und dann über den Spalt am Kopfelementkörper entlang strömt.

Der Fußelementkörper und der Kopfelementkörper können an einem Spalt oder auch an mehreren Spalten aneinander angrenzen, je nach konstruktiver Ausführungsform des Verbindungsbereiches zwischen dem Fußelementkörper und dem Kopfelementkörper.

Der Fußelementkörper kann zur unmittelbaren oder auch zur mittelbaren Befestigung an einer Karosserie oder einem Anbauteil des Kraftfahrzeugs dienen.

Die Stufe kann zwischen jeweils einer Fläche des Fußelementkörpers und einer Fläche des Kopfelementkörpers ausgebildet sein, die zusammen eine Leitfläche ausbilden, die eine Ausdehnungsrichtung hat, von der wenigstens eine Komponente entlang einer Anströmrichtung einer bei Vorwärtsfahrt eines mit der Beobachtungseinrichtung ausgerüsteten Kraftfahrzeugs die Beobachtungseinrichtung anströmenden Luft verläuft. Die genannte Leitfläche ist somit zusammengesetzt aus einer Fläche des Fußelementkörpers und einer Fläche des Kopfelementkörpers, die durch einen Spalt voneinander getrennt sind. Entsprechend ist die Stufe nicht zwingend an einer Fläche realisiert, deren Ebene senkrecht zur Anströmrichtung ausgerichtet ist. Mit anderen Worten ist es an einem Spalt oder SpaltAbschnitt, der an der Frontseite der Beobachtungseinrichtung angeordnet ist und wo bei Vorwärtsfahrt des mit der Beobachtungseinrichtung ausgerüsteten Kraftfahrzeugs Luft nicht zuerst am Fußelementkörper entlang und dann über den Spalt am Kopfelementkörper entlang strömt, sondern frontal auf den Fußelementkörper und den Kopfelementkörper trifft, nicht zwingend erforderlich, hier ebenfalls die Stufe auszubilden.

Die Beobachtungseinrichtung kann ein Außenspiegel sein, so dass das Beobachtungselement eine Spiegelfläche oder ein Spiegelflächensystem ist. In alternativer Ausführungsform ist vorgesehen, dass die Beobachtungseinrichtung eine Kamera ist, so dass das Beobachtungselement eine Kameralinse oder ein Kameralinsensystem ist.

Der Fußelementkörper und/ oder Kopfelementkörper kann durch jeweils ein Gehäuse ausgebildet sein. Ein jeweiliges Gehäuse kann dabei hohl ausgeführt sein.

Weiterhin kann die Beobachtungseinrichtung derart ausgestaltet sein, dass die Beobachtungseinrichtung ein Drehgelenk aufweist, welches den Fußelementkörper und den Kopfelementkörper drehgelenkig miteinander verbindet, wobei montierten Zustand der Beobachtungseinrichtung an einer Karosserie oder einem Anbauteil des Kraftfahrzeugs die Drehachse des Drehgelenks senkrecht verläuft. Damit ist eine Ausführungsform bezeichnet, bei der der Übergang zwischen dem Fußelementkörper und dem Kopfelementkörper durch einen Verbindungsholm ausgebildet ist, und der Kopfelementkörper in einer waagerechten Ebene gedreht werden kann. Hier verläuft der Spalt in mehreren winklig zueinander verlaufenden Abschnitten bzw. es existieren zwischen aneinander angrenzenden Flächen des Fußelementkörpers und des Kopfelementkörpers Einzelspalte, die winklig zueinander verlaufen. Dabei ist jedoch auch eine Ausführungsform nicht von der Erfindung ausgeschlossen, bei der die Drehachse schräg verläuft. In dieser alternativen Ausführungsform verläuft entsprechend auch ein Spalt zwischen dem Fußelementkörper und dem Kopfelementkörper schräg und umlaufend.

Die Höhe der Stufe zwischen dem Fußelementkörper und dem Kopfelementkörper kann dabei mindestens 1 mm betragen. Dieses Stufenmaß gilt dabei mindestens in einem Abstand von 10 mm um die eingezogene Fläche begrenzenden Spalt.

In einer Ausführungsform der Beobachtungseinrichtung ist vorgesehen, dass die Stufe zwischen dem Fußelementkörper und dem Kopfelementkörper durch eine Fläche des Fußelementkörpers und eine Fläche des Kopfelementkörpers realisiert ist, wobei die Fläche des Fußelementkörpers und die Fläche des Kopfelementkörpers parallel zueinander verlaufen. Die Parallelität soll dabei über einen Abstand zum Spalt von wenigstens 50 mm bestehen.

Eine alternative Ausführungsform der Beobachtungseinrichtung sieht vor, dass die Stufe zwischen dem Fußelementkörper und dem Kopfelementkörper 21 durch eine Fläche des Fußelementkörpers und eine Fläche des Kopfelementkörpers realisiert ist, wobei die Fläche des Fußelementkörpers und die Fläche des Kopfelementkörpers spitzwinklig zueinander verlaufen. Das bedeutet, dass einander benachbarte und lediglich durch einen Spalt voneinander getrennte Flächen am Fußelementkörper und am Kopfelementkörper, die eine Stufe ausbilden, mit ihren Außenseiten einen spitzen Winkel einschließen.

In einer vorteilhaften Ausführungsform beträgt der spitze Winkel maximal 20°. Die Spitzwinkligkeit soll dabei über einen Abstand zum Spalt von wenigstens 50 mm bestehen.

Ein weiterer Aspekt der vorliegenden Erfindung ist ein Kraftfahrzeug, welches wenigstens eine beschriebene Beobachtungseinrichtung aufweist. Das Kraftfahrzeug kann dabei ein zumindest teilweise elektrisch antreibbares Kraftfahrzeug und/ oder ein zumindest teilweise autonom fahrbares Kraftfahrzeug sein.

Die Erfindung wird im Folgenden anhand des in den beiliegenden Zeichnungen dargestellten Ausführungsbeispiels erläutert.

### Es zeigen

Figur 1: eine Beobachtungseinrichtung in Form eines Außenspiegels in perspektivischer Ansicht von unten,
Figur 2: eine Schnittansicht der Beobachtungseinrichtung entlang des Schnittverlaufs A-A aus Figur 1, und
Figur 3: eine vergrößerte Darstellung des Teilbereichs B aus Figur 2.

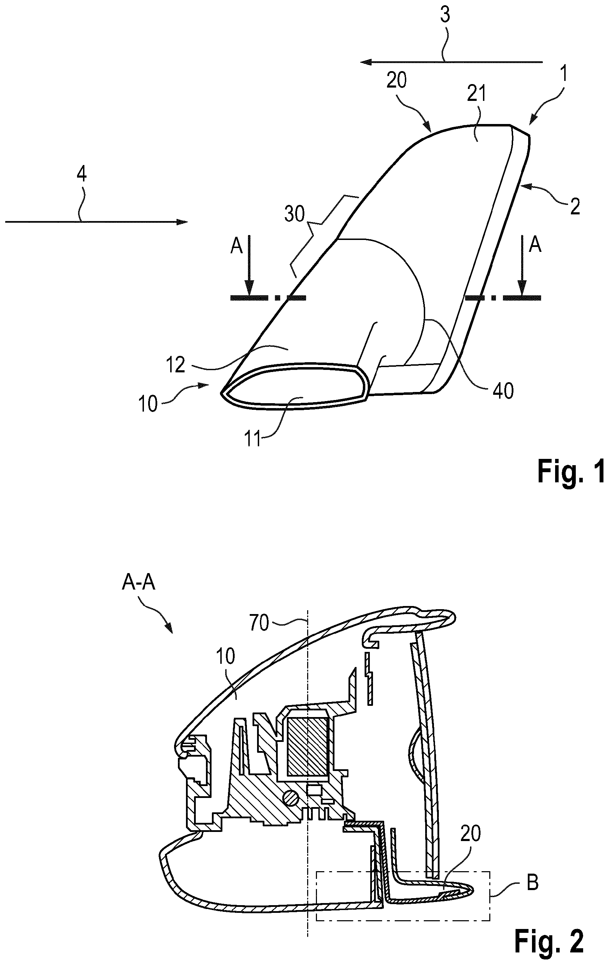

Figur 1 zeigt eine Beobachtungseinrichtung 1 in perspektivischer Ansicht von unten. Die hier dargestellte Beobachtungseinrichtung 1 ist ein Außenspiegel mit einem Fußelement 10 zur Fixierung an einer Karosserie oder auch einem Karosserie-Anbauteil eines Kraftfahrzeugs an einer Befestigungsseite 11 des Fußelements 10.

Die Beobachtungseinrichtung 1 umfasst des Weiteren ein Kopfelement 20, welches mittels eines hier nicht dargestellten Drehgelenks gelenkig und feststellbar mit dem Fußelement 10 verbunden ist. Dabei ist das Kopfelement 20 an der der Befestigungsseite 11 des Fußelements 10 abgewandten Seite des Fußelements 10 angeordnet. Des Weiteren umfasst die hier dargestellte Beobachtungseinrichtung ein Beobachtungselement 2 in Form einer Spiegelfläche.

In einer alternativen Ausführungsform könnte die Beobachtungseinrichtung 1 statt einer Spiegelfläche als Beobachtungselement 2 auch eine Kamera aufweisen.

Das Fußelements 10 umfasst durch ein Gehäuse ausgebildet einen Fußelementkörper 12, und das Kopfelement 20 umfasst ebenfalls durch ein Gehäuse ausgebildet einen Kopfelementkörper 21, wobei der Fußelementkörper 12 der Kopfelementkörper 21 an einem Spalt 40 aneinander angrenzen. Dieser Spalt 40 verläuft durch einen relativ kurzen Verbindungsholm 30, der durch die beiden Gehäuse des Fußelementkörpers 12 sowie des Kopfelementkörpers 21 ausgebildet ist.

Wie aus Figur 2 ersichtlich ist, ist durch das hier nicht dargestellte Drehgelenk eine Drehachse 70 realisiert, die im Wesentlichen senkrecht verläuft, sodass demzufolge eine Schwenkbewegung des Kopfelementkörpers 21 in einer im Wesentlichen waagerechten Ebene um das Fußelement 10 herum ausführbar ist. Entsprechend ist auch der in Figur 1 dargestellte Spalt 40 bogenförmig ausgeführt.

Aus Figur 1 ist des Weiteren ersichtlich, dass es bei Vorwärtsfahrt eines mit der Beobachtungseinrichtung 1 ausgestatteten Kraftfahrzeugs entlang der Fahrtrichtung 3 es zur Anströmung der Beobachtungseinrichtung 1 durch Fahrtwind entlang der Anströmrichtung 4 kommt.

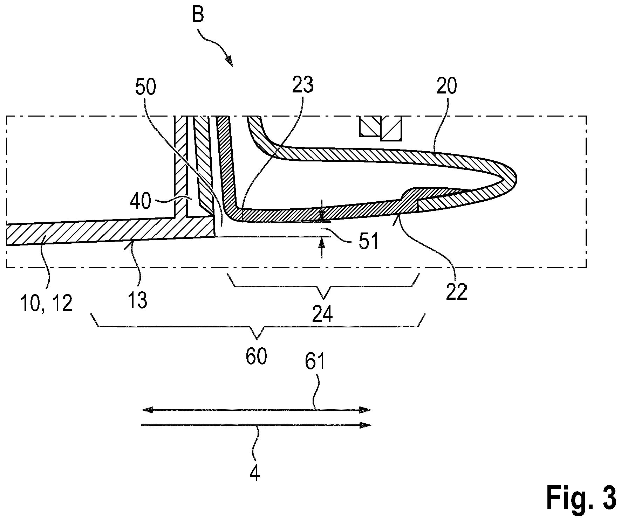

Figur 3 zeigt, dass am Kopfelementkörper 21 an den Spalt 40 angrenzend ein eingezogener Bereich 24 ausgebildet ist, der dazu führt, dass eine Stufe 50 zwischen einer Fläche des Fußelementkörpers 13 und einer Fläche des Kopfelementkörpers 22, die zusammen am Verbindungsholm 30 eine Leitfläche 60 ausbilden, realisiert ist.

Die Fläche des Fußelementkörpers 13 und die Fläche des Kopfelementkörpers 22 sind lediglich durch den Spalt 40 voneinander getrennt.

Eine Ausdehnungsrichtung 61 der Leitfläche 60, die die Fläche des Fußelementkörpers 13 und die Fläche des Kopfelementkörpers 22 umfasst, verläuft dabei entlang der Anströmrichtung 4.

Durch den eingezogenen Bereich 40 im Kopfelementkörper 21, der zu einem Versatz der Fläche des Kopfelementkörpers 22 in Bezug zur Fläche des Fußelementkörpers 13 führt, ist eine Kante 23 des Kopfelementkörpers 21 nach innen versetzt. Derart ist die Stufe 50 mit einer Höhe 51 realisiert, sodass entlang der Anströmrichtung 4 an der Fläche 13 des Fußelementkörpers strömende Luft - nachdem sie den Spalt 40 überströmt hat - nicht auf diese Kante 23 des Kopfelementkörpers 21 trifft. Dadurch wird verhindert, dass unerwünschte Geräuschemissionen auftreten.

### Bezugszeichenliste

- 1: Beobachtungseinrichtung
- 2: Beobachtungselement
- 3: Fahrtrichtung
- 4: Anströmrichtung
- 10: Fußelement
- 11: Befestigungsseite
- 12: Fußelementkörper
- 13: Fläche des Fußelementkörpers
- 20: Kopfelement
- 21: Kopfelementkörper
- 22: Fläche des Fußelementkörpers
- 23: Kante des Kopfelementkörpers
- 24: eingezogener Bereich
- 30: Verbindungsholm
- 40: Spalt
- 50: Stufe
- 51: Höhe der Stufe
- 60: Leitfläche
- 61: Ausdehnungsrichtung
- 70: Drehachse

## Patentansprüche

1. Beobachtungseinrichtung (1) für ein Kraftfahrzeug zur Beobachtung des rückwärtigen Verkehrsgeschehens, umfassend ein Fußelement (10) mit einem Fußelementkörper (12) zur Befestigung an einer Karosserie oder einem Anbauteil des Kraftfahrzeugs, sowie umfassend ein am Fußelement (10) gelenkig angeordnetes Kopfelement (20) mit einem Kopfelementkörper (21) und einem darin oder daran angeordneten Beobachtungselement (2), wobei der Fußelementkörper (12) und der Kopfelementkörper (21) an wenigstens einem Spalt (40) aneinander angrenzen und der Kopfelementkörper (21) an den Spalt (40) angrenzend zumindest einen eingezogenen Bereich (24) aufweist, so dass durch den eingezogenen Bereich (24) eine Stufe (50) zwischen dem Fußelementkörper (12) und dem Kopfelementkörper (21) ausgebildet ist.

2. Beobachtungseinrichtung nach Anspruch 1, **dadurch gekennzeichnet, dass** die Stufe (50) zwischen jeweils einer Fläche des Fußelementkörpers (13) und einer Fläche des Kopfelementkörpers (21) ausgebildet ist, die zusammen eine Leitfläche (60) ausbilden, die eine Ausdehnungsrichtung (61) hat, von der wenigstens eine Komponente entlang einer Anströmrichtung (4) einer bei Vorwärtsfahrt eines mit der Beobachtungseinrichtung (1) ausgerüsteten Kraftfahrzeugs die Beobachtungseinrichtung (1) anströmenden Luft verläuft.

3. Beobachtungseinrichtung nach einem der vorhergehenden Ansprüche, **dadurch gekennzeichnet, dass** die Beobachtungseinrichtung (1) ein Außenspiegel ist, so dass das Beobachtungselement (2) eine Spiegelfläche oder ein Spiegelflächensystem ist; oder dass die Beobachtungseinrichtung (1) eine Kamera ist, so dass das Beobachtungselement (2) eine Kameralinse oder ein Kameralinsensystem ist.

4. Beobachtungseinrichtung nach einem der vorhergehenden Ansprüche, **dadurch gekennzeichnet, dass** der Fußelementkörper (12) und/ oder Kopfelementkörper (21) durch jeweils ein Gehäuse ausgebildet ist.

5. Beobachtungseinrichtung nach einem der vorhergehenden Ansprüche, **dadurch gekennzeichnet, dass** die Beobachtungseinrichtung (1) ein Drehgelenk aufweist, welches den Fußelementkörper (12) und den Kopfelementkörper (21) drehgelenkig miteinander verbindet, wobei montierten Zustand der Beobachtungseinrichtung (1) an einer Karosserie oder einem Anbauteil des Kraftfahrzeugs die Drehachse (70) des Drehgelenks senkrecht verläuft.

6. Beobachtungseinrichtung nach einem der vorhergehenden Ansprüche, **dadurch gekennzeichnet, dass** die Höhe (51) der Stufe (50) zwischen dem Fußelementkörper (12) und dem Kopfelementkörper (21) mindestens 1 mm beträgt.

7. Beobachtungseinrichtung nach einem der vorhergehenden Ansprüche, **dadurch gekennzeichnet, dass** die Stufe (50) zwischen dem Fußelementkörper (12) und dem Kopfelementkörper (21) durch eine Fläche (13) des Fußelementkörpers (12) und eine Fläche (22) des Kopfelementkörpers (21) realisiert ist, wobei die Fläche (13) des Fußelementkörpers (12) und die Fläche (22) des Kopfelementkörpers (21) parallel zueinander verlaufen.

8. Beobachtungseinrichtung nach einem der Ansprüche 1 bis 6, **dadurch gekennzeichnet, dass** die Stufe (50) zwischen dem Fußelementkörper (12) und dem Kopfelementkörper (21) durch eine Fläche (13) des Fußelementkörpers (12) und eine Fläche (22) des Kopfelementkörpers (21) realisiert ist, wobei die Fläche (13) des Fußelementkörpers (12) und die Fläche (22) des Kopfelementkörpers (21) spitzwinklig zueinander verlaufen.

9. Beobachtungseinrichtung nach Anspruch 8, **dadurch gekennzeichnet, dass** der spitze Winkel maximal 20° beträgt.

10. Kraftfahrzeug, umfassend wenigstens eine Beobachtungseinrichtung (1) gemäß einem der Ansprüche 1 bis 9.
